# EUROPEAN PATENT APPLICATION

(11) **EP 4 439 888 A1**
(43) Date of publication of application: **02.10.2024**
(21) Application number: 23203945.3
(22) Date of filing: 17.10.2023
(51) Int. Cl.: H02G 11/00, B60L 53/31

(54) **CHARGER**

(30) Priority: 27.03.2023 KR 20230039937; 08.08.2023 KR 20230103551
(71) Applicant: LG Electronics Inc., Yeongdeungpo-gu Seoul 07336 (KR)
(72) Inventor: SHIN, Jongyeon, 06772 Seoul (KR); KIM, Jintae, 06772 Seoul (KR); SHIM, Jinwoo, 06772 Seoul (KR)
(74) Representative: Vossius & Partner Patentanwälte Rechtsanwälte mbB

(57) **Abstract**

The charger comprises a main body; a screen provided on the front of the main body; a charging cable connected to the main body; a plurality of cable guides disposed on a first surface other than the front surface of the main body to be raised or lowered and sequentially guiding the charging cable; a lower damper connected to a first cable guide of the plurality of cable guides; and an upper damper connected to a second cable guide of the plurality of cable guides.

## Description

The present invention relates to a charger.

A charger is a device used to charge a storage battery.

An example of the charger may be an electric vehicle charger that charges a vehicle such as an electric vehicle, and electrical energy is supplied to a battery of the electric vehicle by connecting a charging connector provided at an end of a charging cable to a connection inlet installed in the electric vehicle.

In order to use the charging cable, the charging cable can be used after unwinding a coiled charging cable and withdrawing the charging cable. Due to a length of a pulled-out charging cable, a portion of a middle portion may touch a floor, and the portion touching the floor may be damaged by repeated use such as being worn out or contaminated by contaminants on the floor.

An example of a charger for an electric vehicle is an electric vehicle quick charger having a cable automatic alignment function disclosed in Korean Registered Patent Publication No. 10-2101479 B1 (May 26, 2020, published), and the electric vehicle quick charger having a cable automatic alignment function is a rapid charger that supplies charging power by connecting a charging cable, and comprises a cable alignment unit provided on a charger body and withdrawing and returning the charging cable, a sensor unit detecting charging using the charging cable or charging termination, and a control unit for controlling driving of the cable aligning unit to withdraw the charging cable when charging is detected by the sensor unit, and controlling driving of the cable aligning unit to return the charging cable when charging termination is detected by the sensor unit, the cable alignment unit comprises a driving roller and a pressure roller disposed at a predetermined interval from the driving roller, a driving module for rotating the roller is connected to the driving roller, the driving module may be a motor, and the pressure roller is connected with a pressure module which presses the roller, and the pressure module may be an elastic spring.

An example of a battery charging device capable of charging a battery is a battery charging device disclosed in Korean Patent Publication No. 10-2010-0108592A (October 7, 2010, published), and the battery charging device comprises a conduit portion configured to receive an outgoing transmission cable; a transmission cable connectable to a current source; and a transmission cable drive mechanism configured to draw the transmission cable into the conduit portion, wherein the transmission cable drive mechanism comprises a traction wire and a drive pulley, and comprises a first wheel facing a second wheel, wherein at least one of the first wheel and the second wheel is a driving wheel and at least one of the first wheel and the second wheel is coupled to the transmission cable and is configured to be retractable, and the transmission cable driving mechanism comprises a minor guiding pulleys, a major looping pulley, a lower pulley disposed under the main looping pulley to receive gravity, and a mass enhancement provided on the lower pulley, wherein a bi-directional rotational drive may be applied to at least one of the sub-guiding pulley and the main looping pulley, the lower pulley may be disposed in a guide channel, the mass enhancement such as a suspended weight, may be further augmented or replaced by an elastic element, such as a spring that is tensioned by being pulled down on a lower pulley.

The present embodiment is to provide a convenience and comfort of the user's vehicle charging environment.

The present embodiment is to provide a charger capable of securing a sufficient length of a charging cable.

The charger according to the present embodiment comprises a main body; a screen provided on the front of the main body; a charging cable connected to the main body; a plurality of cable guides disposed on a first surface other than the front surface of the main body to be raised or lowered and sequentially guiding the charging cable; a lower damper connected to a first cable guide of the plurality of cable guides; and an upper damper connected to a second cable guide of the plurality of cable guides.

The plurality of cable guides may be elevated in opposite directions.

The charger may further comprise a first guide rail for guiding the first cable guide to be raised and lowered; and a second guide rail for guiding the second cable guide to be lowered and raised.

The first surface may be a rear surface of the main body.

The charger may further comprise a side cable guide disposed on a side surface of the main body to be raised and lowered and guiding the charging cable; a side damper connected to the side cable guide; and a side guide rail for guiding the elevation of the side cable guide.

The charger may further comprise a cable cover covering the charging cable.

The cable cover may comprise a side cover disposed on the side of the main body; and a rear cover disposed on the rear surface of the main body.

An outlet through which the charging cable passes may be formed on the side of the main body.

A cable connector to which the charging cable is connected may be provided on the side of the main body.

Each of the plurality of cable guides may comprise a bracket and at least one pulley rotatably installed on the bracket.

The lower damper may be located below the first cable guide.

The lower damper may comprise a piston rod; and a rod mount disposed at an upper end of the piston rod and mounted on the first cable guide.

The upper damper may be located above the second cable guide.

The upper damper may comprise a piston rod; and a rod mount disposed at a lower end of the piston rod and mounted on the second caber guide.

The charger may further comprise an upper cable guide disposed above the main body.

An example of the upper cable guide may comprise a fixed bracket having a long extension in the front-rear direction; a fixed cable guide installed on the fixed bracket; a fixed cable guide installed on the fixed bracket; a movable bracket arranged to rotate or slide on the extension; and a movable cable guide installed on the movable bracket.

Another example of the upper cable guide may comprise an arm body in which an arm space is formed; and a plurality of arm guides accommodated in the arm space.

The charger may further comprise an arm rail for guiding the charging cable is formed on the arm body, and at least one of the plurality of arm guides may be disposed inclined forward or backward.

### BRIEF DESCRIPTION OF THE DRAWINGS

FIG. 1 is a perspective view of a charger according to this embodiment;
FIG. 2 is a side view of a charger according to this embodiment;
FIG. 3 is a rear view of the charger according to the present embodiment;
FIG. 4 is a side view in which the cable cover according to the present embodiment is separated;
FIG. 5 is a rear view in which the cable cover according to the present embodiment is separated;
FIG. 6 is a plan view showing the inside of the arm body according to the present embodiment;
FIG. 7 is a side view showing a cable guide and a guide rail according to this embodiment;
FIG. 8 is a side view showing a modified example of a cable guide according to this embodiment;
FIG. 9 is a cross-sectional view showing a bracket and a guide rail according to this embodiment;
FIG. 10 is a side view showing a gas spring according to this embodiment;
FIG. 11 is a cross-sectional view of a gas spring according to this embodiment;
FIG. 12 is a schematic diagram of a first example of a damper according to this embodiment;
FIG. 13 is a schematic diagram of a second example of a damper according to this embodiment;
FIG. 14 is a schematic diagram of a third example of a damper according to this embodiment;
FIG. 15 is a diagram when the charger according to the present embodiment charges an electric vehicle;
FIG. 16 is a cross-sectional view of an arm guide according to the present embodiment.
FIG. 17 is a diagram showing another example of a charger according to this embodiment;
FIG. 18 is a perspective view showing another example of a charger according to this embodiment;
FIG. 19 is a side view showing the side of another example of the charger according to the present embodiment;
FIG. 20 is a rear view showing the rear of another example of a charger according to this embodiment;

Hereinafter, detailed embodiments will be described in detail with reference to the accompanying drawings.

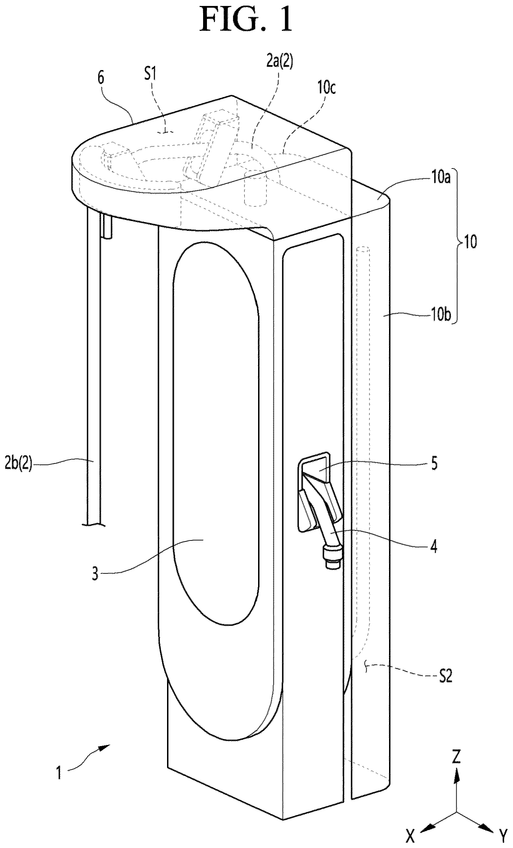

FIG. 1 is a perspective view of a charger according to this embodiment.

The charger may comprise a main body 1 and a charging cable 2.

The main body 1 may form an exterior of the charger. The main body 1 may comprise a housing forming an exterior. The main body 1 may transmit external power to the charging cable 2. A cable connector (not shown) to which the charging cable 2 is connected may be disposed in the main body 1.

The main body 1 may be provided with a screen 3 operated by a user. The screen 3 may be disposed on the front side of the main body 1.

The main body 1 may be provided with a connector holder 5 in which the connector 4 is provided on the charging cable 2 is mounted. The connector holder 5 may be disposed on one of the left and right sides of the main body 1.

An arm body 6 may be disposed above the main body 1. The arm body 6 may be disposed above the main body 1 and may be disposed to protrude in a forward direction. The lower surface of the arm body 6 may face the front of the main body 1. The lower surface of the arm body 6 may face the front of the screen 3.

An arm space S 1 may be formed inside the arm body 6. A portion of the charging cable 2 may be accommodated in the arm space.

The arm body 6 may cover a portion of the charging cable 2 located on the upper side of the main body 1, and the arm body 6 may be an upper cover protecting the charging cable 2.

The charging cable 2 is configured to transmit external power supplied to the charger to the electric vehicle, and one end of the charging cable 2 may be electrically connected to the power source through a cable connector (not shown) of the main body 1, and the other end of charging cable 2 may be provided with a connector 4 connected to the connection inlet of the electric vehicle.

The charging cable 2 may be drawn from the inside of the arm body 6 to the outside of the arm body 6.

The charger may be a fast charger for rapidly charging the electric vehicle or a slow charger for slowly charging the electric vehicle.

The charging cable 2 may comprise a charging line through which current may flow and an outer shell surrounding the charging line. The charging cable 2 may further comprise a communication line through which data is transmitted. The communication line may be arranged inside the outer shell. The charger can charge the electric vehicle through a charging line and communicate with the electric vehicle through a communication line.

The charging cable 2 may comprise a cooling channel or a cooling pipe through which cooling fluid may pass. Examples of cooling fluids may be air, water, refrigerants, and the like.

The charging cable 2 may be a cable capable of transmitting a current of 30 A or more. The diameter of the charging cable 2 may be 30 mm or more.

The charging cable 2 may comprise a concealed portion 2a accommodated inside the charger and an exposed portion 2b drawn out of the charger.

The length of the exposed portion 2b may vary depending on the location of the electric vehicle, and the charger may guide the concealed portion 2a so that the length of the exposed portion 2b may be 3m to 8m, and the exposed portion 2b may have a maximum withdrawal length of 8 m.

It is preferable that the tensile force of the charging cable 2 is 30 N or less. The arm body 6 may guide the charging cable 2 so that the maximum tensile force of the charging cable 2 is 30N.

The charger may further comprise a cable cover 10.

The cable cover 10 may be disposed on the main body 1 to which the charging cable 2 is connected. An inner space S2 may be formed inside the cable cover 10. The cable cover 10 may be disposed on one surface of the main body 1, and the inner space S2 may be formed between the one surface of the main body 1 and the cable cover 10. The cable cover 10 may cover the charging cable 2 from the outside of the main body 1. The cable cover 10 may cover a portion of the charging cable 2 located outside the main body 1. The cable cover 10 may be disposed on the rear surface of the main body 1. The cable cover 10 may be a rear cover protecting the charging cable 2. The cable cover 10 may be disposed on the side of the main body 1. The cable cover 10 may be a side cover that protects the charging cable 2.

The cable cover 10 may be disposed on the rear surface of the body 1, and the cable cover 10 may comprise a rear plate 10a, a left plate 10b, and a right plate 10c.

The housing of the body 1, the arm body 6, and the cable cover 10 may constitute a case of the charger.

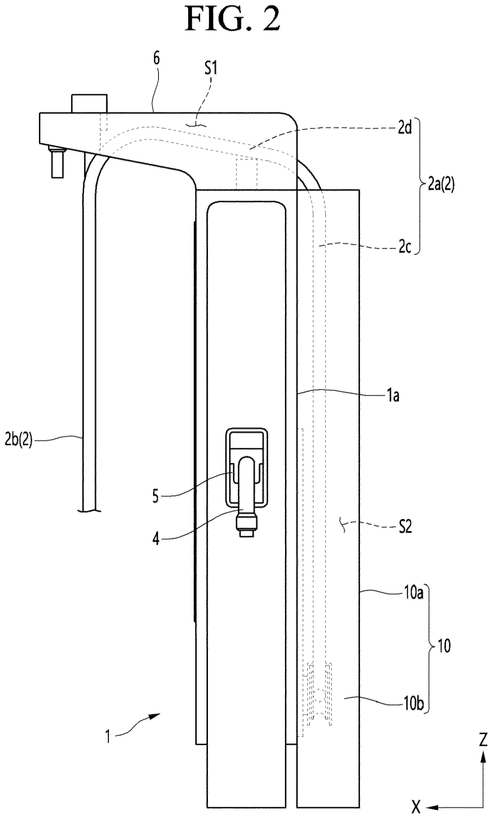

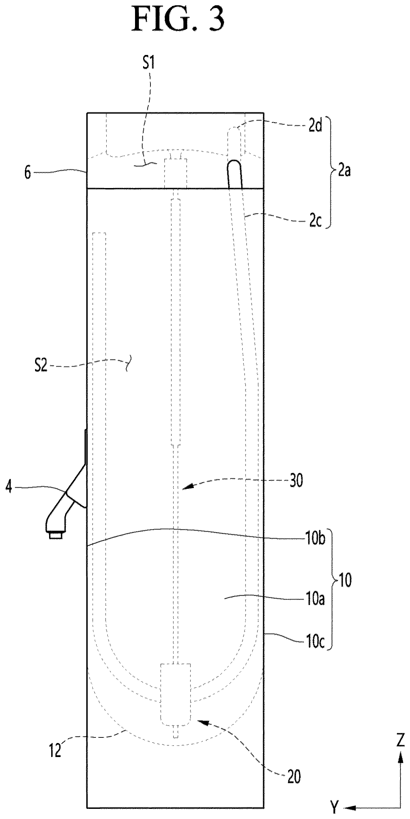

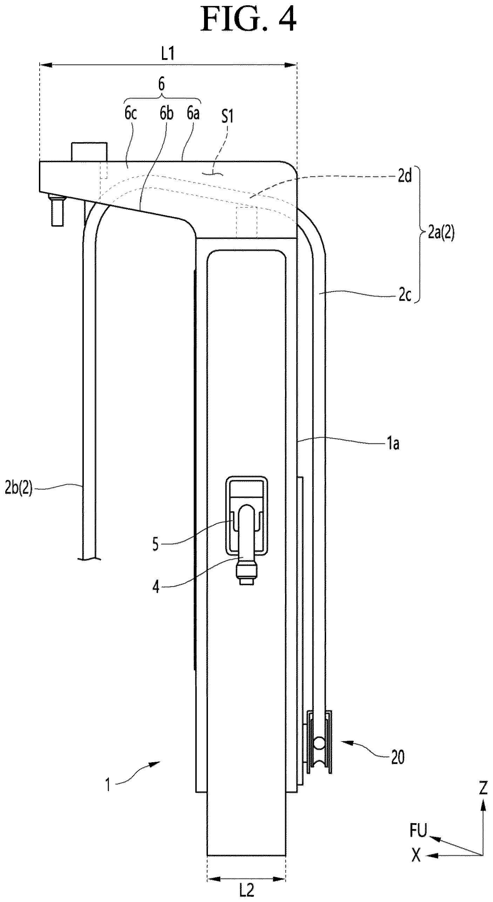

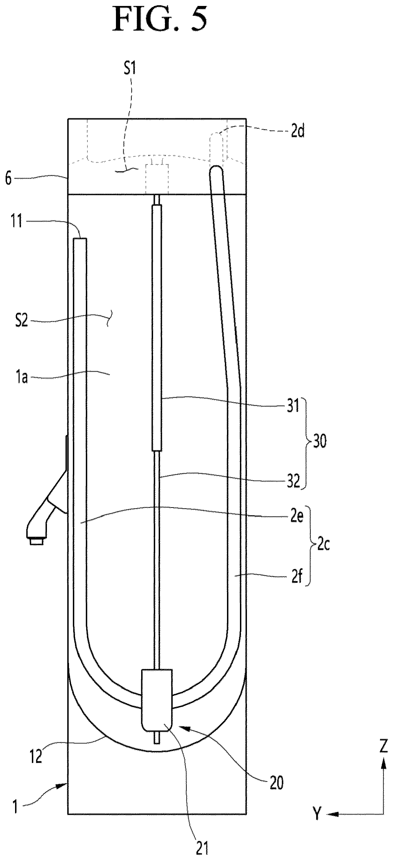

FIG. 2 is a side view of a charger according to this embodiment; FIG. 3 is a rear view of the charger according to the present embodiment; FIG. 4 is a side view in which the cable cover according to the present embodiment is separated; and FIG. 5 is a rear view in which the cable cover according to the present embodiment is separated;

An inner outlet 11 (refer to FIG. 5) may be formed in the main body 1. The charging cable 2 may extend to the outside of the main body 1 through the inner outlet 11. The inner outlet 11 may be an inner port through which the charging cable 2 is drawn out of the main body 1.

The inner outlet 11 may be formed closer to the top of the top and bottom of the main body 1.

The inner outlet 11 may be formed on a surface of the main body 1 facing the cable cover 10. The inner outlet 11 may be formed at a position that can be covered by the cable cover 10. The cable cover 10 may be a cover that hides the inner outlet 11 from being visible from the outside.

When the cable cover 10 is disposed on the rear surface of the body 1, the inner outlet 11 may be formed on the rear plate 1a of the main body 1. When the cable cover 10 is disposed on the side of the main body 1, the inner outlet 11 may be formed on the side plate of the main body 1.

As shown in FIG. 4, the arm body 6 may comprise an upper plate 6a, a lower plate 6b, and a border body 6c. The arm space S1 may be formed by the upper plate 6a, the lower plate 6b, and the border body 6c. The arm space S1 may be defined as a space surrounded by the upper plate 6a, the lower plate 6b, and the border body 6c.

The front-rear direction width L1 of the arm body 6 may be longer than the front-rear direction width L2 of the main body 1.

The upper plate 6a may be disposed above the border body 6c and may be horizontal.

The lower plate 6b may be disposed inclined at a predetermined angle. The lower plate 6b may be disposed obliquely toward the front upper side. The lower plate 6b may extend in the direction of the upper front side FU. The lower plate 6b may have an acute angle of inclination with the horizontal plane.

An arm body display may be disposed on the arm body 6. The arm body display may be disposed on at least one of the lower plate 6b and the border body 6c. A user may input a charging command through the arm body display. The user can check the charging information through the arm body display.

The charging cable 2 may extend into the inner space S2 through the inner outlet 11, extend from the inner space S2 to the arm space S1, and extend from the arm space S1 to the outside of the arm body (6).

One portion of the concealed portion 2a accommodated in the inner space S2 may be the inner cable 2c. The other portion of the concealed portion 2a accommodated in the arm space S1 may be an upper cable 2d.

The upper cable 2d may extend from the upper end of the inner cable 2c to the arm space S 1.

The upper cable 2d may be defined as a portion of the charging cable 2 accommodated in the arm space S1.

The charger may comprise a cable guide 20 and a damper 30.

As shown in FIG. 5, the inner cable 2c may be generally struck in a 'U' shape by the cable guide 2.

The inner cable 2c can be divided into an introduction portion 2e, an inverted portion 2f, and a guide portion 2h.

The introduction portion 2e may be a portion of the inner cable 2c between the inner outlet 11 and the cable guide 20.

The inverted portion 2f may be a portion after the cable guide 20 of the inner cable 2c.

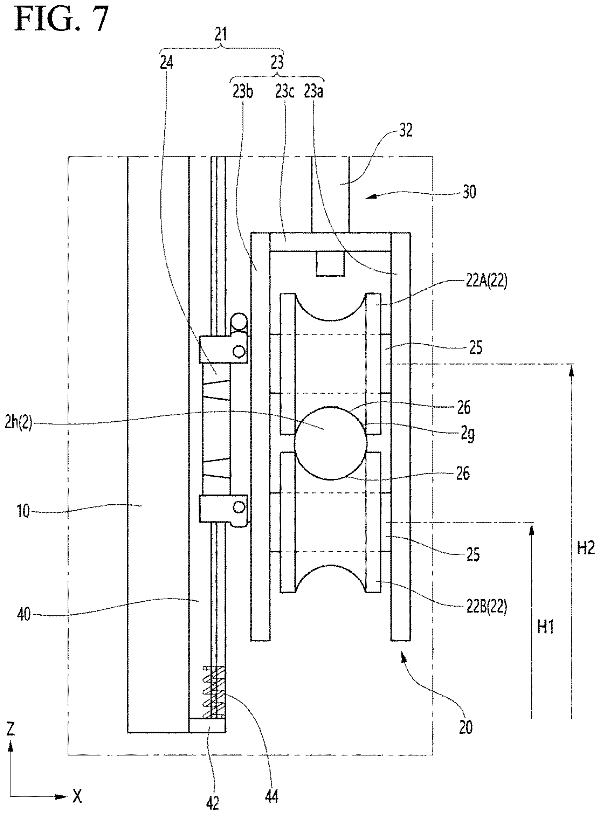

The guide portion 2h (refer to FIG. 7) may be a portion that comes into contact with the cable guide 20 and is guided by the cable guide 20.

The upper cable 2d may extend from an upper end of the inner cable 2c. The upper cable 2d may extend from an upper end of the inverted portion 2f.

The cable guide 20 may be movably accommodated in the inner space S2. The cable guide 20 may be movably disposed in the inner space S2. The cable guide 20 may guide the charging cable 2 while moving up and down by the charging cable 2, and may be a lifting guide.

As shown in FIG. 4, the cable guide 20 may be a pulley assembly including a bracket 21 and at least one pulley 22.

At least one pulley 22 may be rotatably installed on the bracket 21.

As shown in FIG. 5, the damper 30 may be connected to the bracket 21 and may restrict the cable guide 20 from moving rapidly. The damper 30 may be mounted on the main body 1 or the cable cover 40.

One example of the damper 30 may comprise a spring such as a coil spring, and the other example of the damper 30 may comprise a gas spring such as a compression gas spring or a tension gas spring. The damper 30 can be applied to any configuration capable of decelerating the bracket 21. Hereinafter, the charger will be described as the damper 30 including a gas spring.

The damper 30 may be disposed long in the vertical direction (Z) in the inner space (S2). The damper 30 may decelerate the cable guide 20 at the upper side of the cable guide 20.

The damper 30 may comprise a body 31 and a piston rod 32.

A space for accommodating gas may be formed in the body 31. The body 31 may be connected to one of the rear plate 1a of the main body 1, the back plate 10a of the cable cover 10, and the arm body 6.

The piston rod 32 may have a piston accommodated in a space of the body 31. The piston rod 32 may be connected to bracket 21. A lower end of the piston rod 32 may be connected to the bracket 21.

The cable guide 20 may be raised by the charging cable 2, and the cable guide 20 may be lowered by the weight of the cable guide 20 and the damping force of the damper 30.

The charger can guide the withdrawal of the charging cable 2 and can lead the charging cable 2 without a driving source such as a motor.

The charger may comprise a guide rail 40.

The guide rail 40 may guide the elevation of the cable guide 20. The guide rail 40 may be mounted on the main body 1 or the cable cover 40. The guide rail 40 may be disposed long in the vertical direction (Z) on the main body 1 or the cable cover 10.

FIG. 4 shows an example in which the guide rail 40 is disposed on the rear plate 1a of the main body 1, but the guide rail 40 is not limited to being disposed on the rear plate 1a of the main body 1, and the guide rail 40 may be disposed on the back plate 10a of the cover 10.

The charger may further comprise a lower cover (12, refer to FIG. 5) disposed inside the cable cover 10. The lower cover 12 may be disposed between the left plate portion 10b and the right plate portion 10c of the cable cover 10. The lower cover 12 may be formed in a convex shape toward the bottom of the charger.

The charger may comprise a spacer maintaining a distance between the charging cable 2 and the cable cover 10. The spacer may be a spacer disposed on the cable cover 10. The spacer may be disposed between the cable cover 10 and the charging cable 2, and may separate the outer surface of the charging cable 2 from the inner surface of the cable cover 10.

The charger may comprise a spacer maintaining a gap between the charging cable 2 and the arm body 6. The spacer may be a spacer disposed on the arm body 6. The spacer may be disposed between the arm body 6 and the charging cable 2, and may separate the outer surface of the charging cable 2 from the inner surface of the arm body 6.

The charger may comprise a spacer maintaining a distance between the introduction portion 2e and the inverted portion 2f. The spacer may be a spacer disposed on the main body 1 or the cable cover 10. The spacer may be disposed between the introduction portion 2e and the inverted portion 2f, and may space apart the introduction portion 2e and the inverted portion 2f from each other.

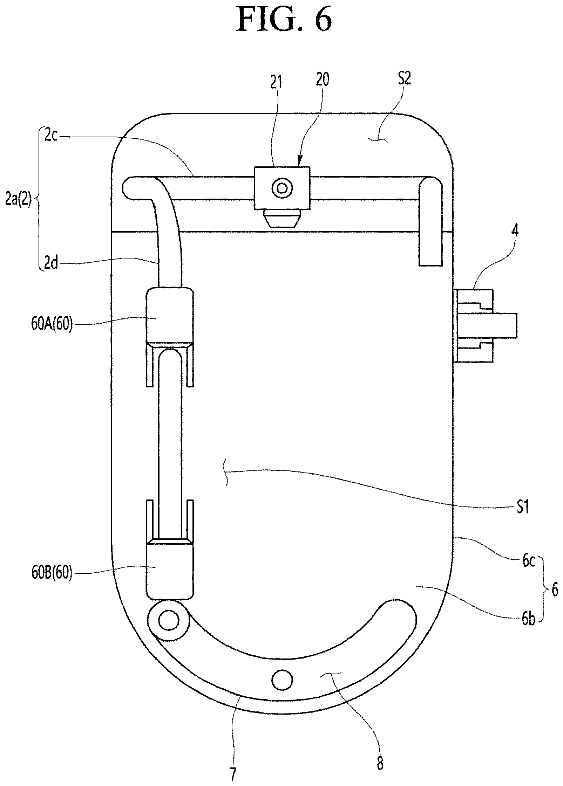

FIG. 6 is a plan view showing the inside of the arm body according to the present embodiment.

The charging cable 2 extending from the inner space S2 may be accommodated in the arm space S1.

An arm rail 7 guiding the charging cable 2 may be formed on the arm body 6.

The arm rail 7 may be formed on the lower plate 6b of the arm body 6.

The arm rail 7 may have a forward convex arc shape.

An outlet 8 through which the charging cable 2 is taken out of the charger may be formed on the arm rail 7. The outlet 8 may be an outer port through which the charging cable 2 is pulled out of the charger.

The charging cable 2 may pass through the outlet 8 of the arm rail 7 of the arm body 6 and may be drawn out of the charger. The charging cable 2 can be guided along the arm rail 7 . The charging cable 2 may be guided in the front-back direction (X) and the left-right direction (Y) by the arm rail 7.

The arm body 6 may be disposed on the upper portion of the main body 1 so as to be able to move up and down. An arm body rail for guiding the elevation of the arm body 6 may be provided in the main body 1, and the arm body 6 may be elevated along the arm body rail.

An extension body covering between the main body 1 and the arm body 6 may be formed in the upper portion of the main body 1 or the lower portion of the arm body 6, and the arm body 6, the extension body, and the main body 1 may be arranged in the order in the vertical direction.

FIG. 7 is a side view showing a cable guide and a guide rail according to this embodiment.

The bracket 21 may be an assembly of a plurality of members. The bracket 21 may comprise a bracket body 23 and a slider 24.

The bracket body 23 may comprise a front plate portion 23a, a rear plate portion 23b, and an upper plate portion 23c.

The front plate portion 23a and the rear plate portion 23b may be spaced apart in the front-back direction (X).

Each of the front plate portion 23a and the rear plate portion 23b can support the pulley 22 rotatably.

The upper plate portion 23c may connect the upper end of the front plate portion 23a and the upper end of the rear plate portion 23b.

A connection portion to which the piston rod 32 of the gas spring 30 is connected may be formed in the upper plate portion 23c.

The slider 24 may be fastened to one of the front plate portion 23a and the rear plate portion 23b of the bracket body 23. The slider 24 may be located outside the bracket body 23.

The pulley 22 may be rotated about a horizontal support shaft 25. The support shaft 25 may be horizontally disposed on the bracket body 23. The pulley 22 may be rotated clockwise or counterclockwise around the support shaft 25.

A recessed portion 26 in which a portion of the charging cable 2 is accommodated is formed on the outer circumferential surface of the pulley 22, and the curvature of the outer surface of the charging cable 2 and the curvature of the recessed portion 26 may be the same. The outer surface 2g of the charging cable 2 may be in surface contact with the recessed portion 26, and the charging cable 2 may be guided to the pulley 22 with high reliability.

A plurality of pulleys 22 may be provided to the bracket 21.

The plurality of pulleys may comprise an upper pulley 22A and a lower pulley 22B.

The charging cable 2 may comprise a guide portion 2h guided to the upper pulley 22A and the lower pulley 22B. The guide portion 2h may be a portion disposed between the upper pulley 22A and the lower pulley 22B of the charging cable 2.

The upper pulley 22A may be rotatably disposed on the bracket 21. The upper portion of the guide portion 2h may guide the upper pulley 22A.

When the charging cable 2 is pulled in from the outside, the upper pulley 22A may guide the guide portion 2h. When the charging cable 2 is pulled out, the upper pulley 22A can be pushed upward by the guide portion 2h.

The lower pulley 22B may be rotatably disposed on the bracket 21. The height H1 of the lower pulley 22B may be lower than the height H2 of the upper pulley 22A. A lower portion of the guide portions 2h may be guided the lower pulley 22B.

When the charging cable 2 is pulled in from the outside, the lower pulley 22B can be pushed downward by the guide portion 2h. When the charging cable 2 is pulled out, the lower pulley 22b can guide the guide portion 2h.

A stopper 42 on which the bracket 21 is hung may be provided on the guide rail 40.

A damping spring 44 may be provided on at least one of the guide rail 40 and the bracket 21.

The damping spring 44 can dampen the bracket 21 when the cable guide 20 reaches its upper limit position or lower limit position. An example of damping spring 44 may be a coil spring.

An example of the damping spring 44 may be mounted on the bracket 21, and when the cable guide 20 approaches the upper limit position or the lower limit position, it is supported in contact with the guide rail 40 or the stopper 42. and buffer the bracket 21.

Another example of the damping spring 44 may be mounted on the guide rail 40 or the stopper 42, and when the cable guide 20 approaches the upper limit position or the lower limit position, it is supported in contact with the bracket 21 and buffer the bracket 21.

The other example of the damping spring 44 is mounted on the bracket 21 and can be connected to the guide rail 40 or the stopper 42, and when the cable guide 20 approaches the upper limit position or the lower limit position, buffer the bracket 21.

The damping spring 44 may be a damper that decelerates the cable guide 20.

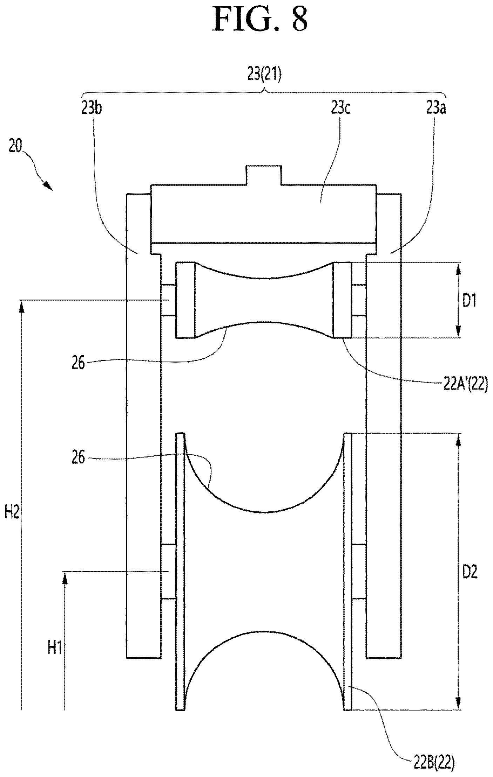

FIG. 8 is a side view showing a modified example of a cable guide according to this embodiment.

The outer diameter D1 of the upper pulley 22A' may be smaller than the outer diameter D2 of the lower pulley 22B.

The curvature of the recessed portion 26 of the upper pulley 22A may be smaller than the outer curvature of the charging cable 2.

The curvature of the recessed portion 26 of the lower pulley 22B may be the same as the curvature of the outer surface of the charging cable 2 .

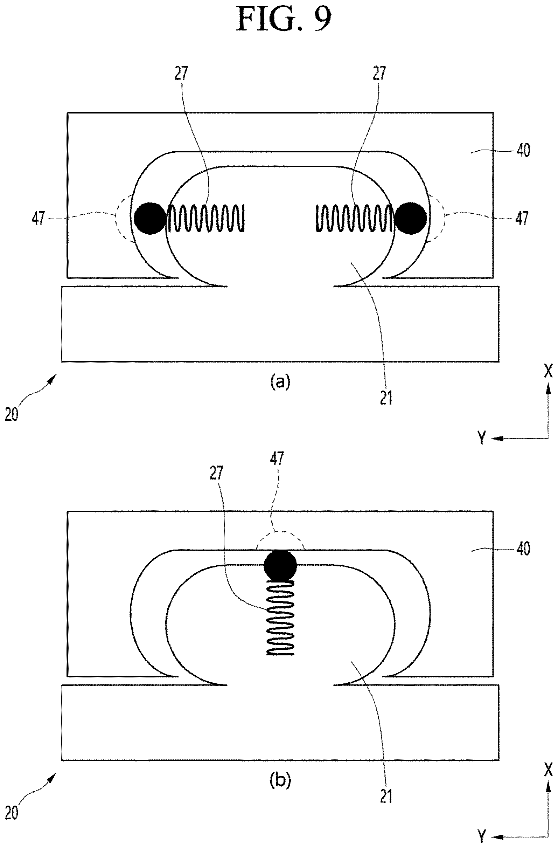

FIG. 9 is a cross-sectional view showing a bracket and a guide rail according to this embodiment;

The charger may comprise a locking mechanism.

The locking mechanism may lock/unlock the cable guide 20 to at least one of the guide rail 40, the cable cover 10, and the main body 1.

The bracket 21 of the cable guide 20 can be locked or unlocked to the guide rail 40. The bracket 21 to which no external force is applied may be locked and maintained by the guide rail 40 by a locking mechanism. When an external force is applied, the bracket 21 can be unlocked from the guide rail 40.

One example of a locking mechanism may comprise a ball spring 27.

A ball spring 27 may be disposed on the bracket 21, and a groove 47 may be formed in the guide rail 40 in which the ball spring 27 is inserted and caught.

The ball spring 27 may be a detent spring in which a detent ball is formed, the groove 47 may be a detent groove into which the detent ball is inserted, and the position of the cable guide 20 can be determined by the ball spring 27 and the groove 47.

When the ball of the ball spring 27 is inserted into the groove 47 and locked, the cable guide 20 does not arbitrarily move up and down, and can maintain its current position (That is, current height).

When an external force is applied to the charging cable 2, the external force can be transmitted to the cable guide 20, and the ball of the ball spring 27 can escape from the groove 47.

A plurality of grooves 47 may be formed in the guide rail 40. The plurality of grooves 47 may be spaced apart in the vertical direction Z of the guide rail 40.

The plurality of grooves 47 may comprise an upper limit groove, and when the cable guide 20 is in an upper limit position, the ball of the ball spring may be caught in the upper limit groove.

The plurality of grooves 47 may comprise the lower limit groove, and when the cable guide 20 is at the lower limit position, the ball of the ball spring may be caught in the lower limit groove.

The plurality of grooves 47 may comprise a center groove positioned between the upper limit groove and the lower limit groove. When the cable guide 20 is located at a specific position between the upper limit position and the lower limit position, the ball of the ball spring 27 can be caught in the center groove.

One example in which the ball springs 27 are disposed on both left and right sides of the bracket 21 and grooves 47 are recessed on both sides of the guide rail 40 is showed in (a) of FIG. 9.

The other example in which the ball spring 27 is disposed at the front or rear end of the bracket 21 and the groove 47 is recessed in the guide rail 40 is showed in (b) of FIG. 9.

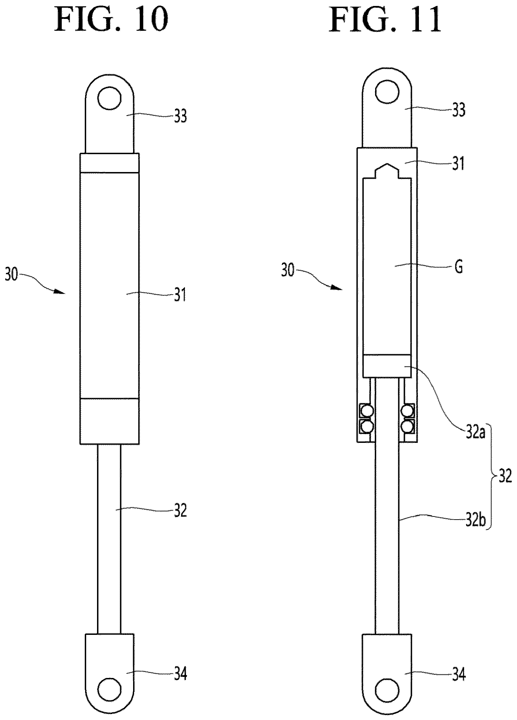

FIG. 10 is a side view showing a gas spring according to this embodiment; and FIG. 11 is a cross-sectional view of a gas spring according to this embodiment.

The damper 30 may comprise a gas spring.

The gas spring may comprise a body 31 and a piston rod 32.

A space in which gas G is accommodated may be formed inside the body 31. One example of the gas G accommodated inside the body 31 may be nitrogen gas (Nitrogen Gas).

The body 31 may comprise a body mounter 33. The body mounter 33 may be mounted on at least one of the main body 1, the arm body 6, and the cable cover 10.

The piston rod 32 may comprise a piston 32a accommodated in the space of the body 31 and a rod 32b protruding from the piston 32a.

One end of the piston rod 32 may be provided with a rod mount 34 to which the bracket 21 is mounted.

The piston 32a may be formed at one end of the rod 32b, and the rod mount 34 may be formed at the other end of the rod 32b.

The piston 32a may move up and down in the space of the body 31. The piston 32a can be raised in the space of the body 31 while the external force acts on the rod 32b and can compress the gas G.

When the external force is removed, the piston 32a may be pushed down by the compressed gas G, and the rod 32b may be moved down.

The gas spring may comprise a gas spring locking mechanism, and the gas spring locking mechanism may comprise a ball spring and a groove.

The ball spring may be disposed on any one of the body 31 and the piston rod 32.

The ball spring of the gas spring locking mechanism may have the same structure as the ball spring 27 (refer to FIG. 9) of the locking mechanism.

The groove may be formed on the other one of the body 31 and the piston rod 32, and the ball of the ball spring may be caught in the groove.

The groove of the gas spring locking mechanism may have the same structure as the groove (47, refer to FIG. 9) of the locking mechanism.

An example of the gas spring locking mechanism may comprise a ball spring disposed on the piston of the piston rod 32 and a groove formed on the body 31.

A plurality of grooves may be formed. A plurality of grooves may be formed in plurality in the longitudinal direction of the gas spring.

The plurality of grooves may comprise an upper limit groove, and when the cable guide 20 is in an upper limit position, the ball of the ball spring may be caught in the upper limit groove.

The plurality of grooves may comprise the lower limit groove, and when the cable guide 20 is at the lower limit position, the ball of the ball spring may be caught in the lower limit groove.

The plurality of grooves may comprise a center groove positioned between the upper limit groove and the lower limit groove. When the cable guide 20 is located at a specific position between the upper limit position and the lower limit position, the ball of the ball spring can be caught in the center groove.

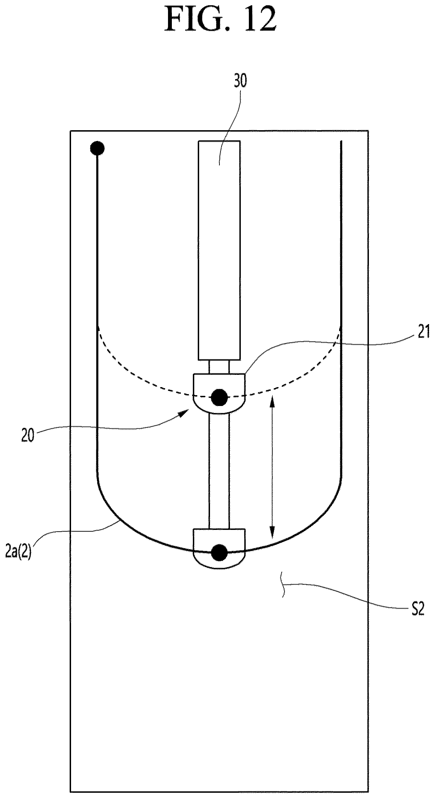

FIG. 12 is a schematic diagram of a first example of a damper according to this embodiment.

The damper 30 may comprise an upper gas spring.

An upper gas spring may be disposed above the cable guide 20.

A rod mount 34 to which the bracket 21 is mounted may be provided at the lower end of the upper gas spring.

An example of an upper gas spring may be a compression gas spring.

When an external force (pulling force) is applied to the cable 2, the cable guide 20 can be lifted by the cable 2 while guiding the cable 2.

When an external force (pulling force) is released from the cable 2, the cable guide 20 may be lowered by its own weight or by gas pressure.

The initial stroke value of the upper gas spring may be fixed and may be controlled through the guide rail 40.

When the piston rod 32 moves in the stroke range, the upper gas spring can be naturally damped by the gas pressure inside it.

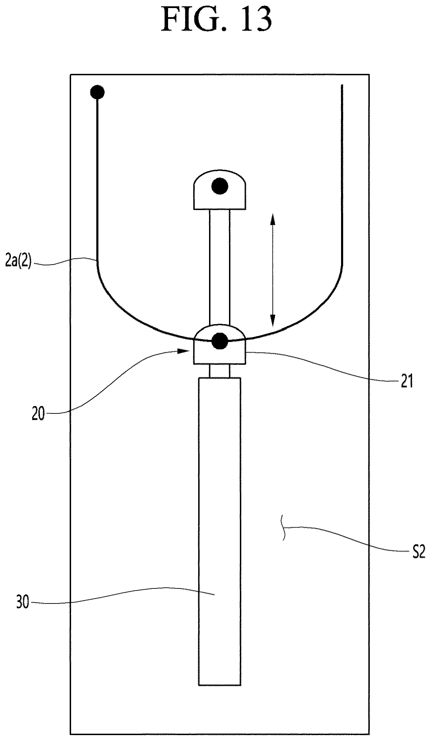

FIG. 13 is a schematic diagram of a second example of a damper according to this embodiment;

The damper 30 may comprise a lower gas spring.

A lower gas spring may be disposed below the cable guide 20.

A rod mount 34 to which the bracket 21 is mounted may be provided at an upper end of the lower gas spring.

An example of a lower gas spring may be a tension gas spring.

When an external force (pulling force) is applied to the cable 2, the cable guide 20 can be lifted by the cable 2 while guiding the cable 2.

When an external force (pulling force) is released from the cable 2, the cable guide 20 may be lowered by its own weight.

An initial stroke value of the lower gas spring may be fixed and may be controlled through the guide rail 40.

In the lower gas spring, the piston rod 32 may initially protrude as much as a set length, and may exert a damping function when restored.

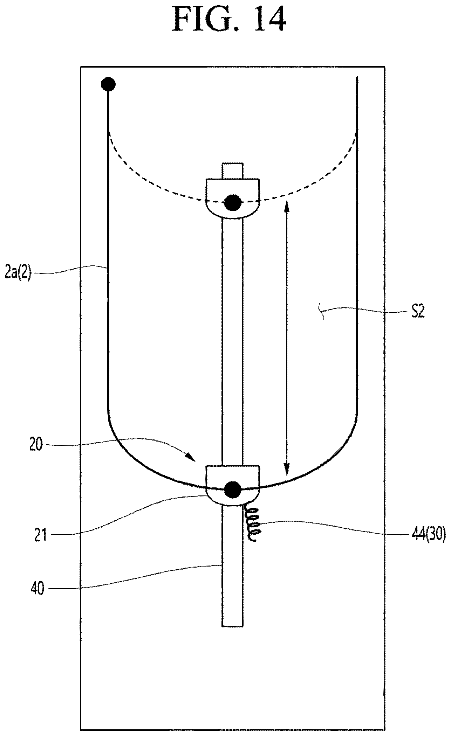

FIG. 14 is a schematic diagram of a third example of a damper according to this embodiment;

A third example of the damper may be a case that does not comprise a gas spring, and the bracket 21 and the pulley 22 may serve as weights.

When the external force (pulling force) applied to the charging cable 2 is removed, the cable guide 20 can descend by its own weight, and when the cable guide 20 descends, the length of the portion 2c accommodated in the inner space S2 can be increased.

The damper 30 may be disposed to minimize a sudden descent of the cable guide 20.

The damper 30 may comprise a damping spring 44 connected to the gasket 21. An example of damping spring 44 may be a coil spring.

The damping spring 44 may contact at least one of the main body 1, the cable cover 10, and the guide rail 40 or a separate stopper before the cable guide 20 reaches the lower limit position, and may decelerate the gasket 21 while being compressed.

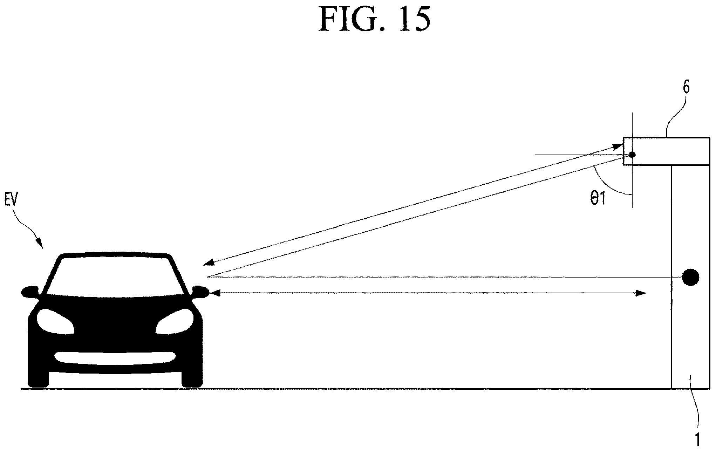

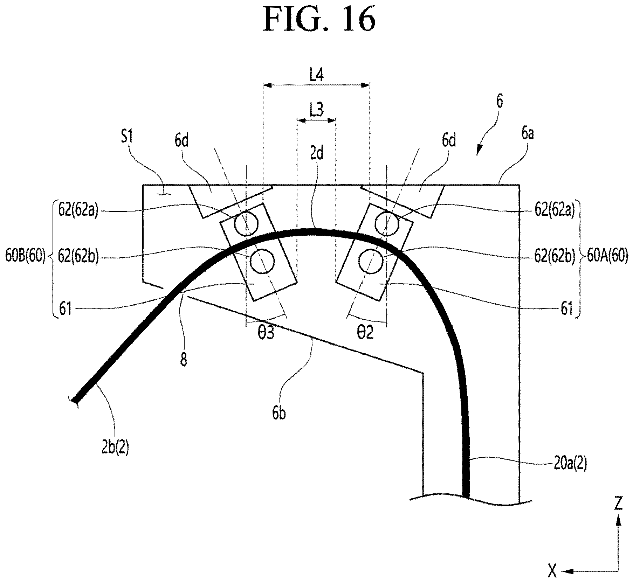

FIG. 15 is a diagram when the charger according to the present embodiment charges an electric vehicle; and FIG. 16 is a cross-sectional view of an arm guide according to the present embodiment.

As shown in FIG. 15, the electric vehicle (EV) can be charged at a location spaced apart from the charger, and the charging cable 2 extending to the electric vehicle (EV) is inclined at a maximum inclination angle θ1 with respect to the vertical line. The maximum inclination angle θ1 may be set in the range of 60° to 80°.

The charging cable 2 may preferably bent or curved at an angle of less than 90°, and the charger preferably guides the hidden portion 2a so that the hidden portion 2a is bent or curved at an angle of less than 90°.

The charger may comprise an arm guide 60 guiding the charging cable 2. The arm guide 60 may be disposed in the arm space S1. The arm guide 60 may be disposed inside the arm body 6 and may guide the charging cable 2 inside the arm body 6.

The arm guide 60 may guide the upper cable 2d of the charging cable 2, and the arm guide 60 may guide the upper cable 2d so as not to be bent at an angle of 90° or more.

The upper cable 2d may be bent or curved with a predetermined curvature by the arm guide 60.

The arm guide 60 may be disposed such that the upper cable 2d has at least one curvature.

The upper cable 2d can be bent or curved with one curvature in the arm space S1, and can be bent or curved with two or more curvatures in the arm space S 1.

The arm guide 60 may comprise an arm bracket 61 and an arm pulley 62.

The arm bracket 61 may be installed on at least one of the upper plate 6a and the lower plate 6b of the arm body 6.

A mounter 6d for mounting the arm guide 60 may be disposed on the upper plate 6a or the lower plate 6b of the arm body 6.

An upper end of the arm bracket 61 may be mounted below a mounter 6d installed below the upper plate 6a of the arm body 6.

The arm bracket 61 can be mounted obliquely by the mounter 6d. An inclined surface may be formed on the mounter 6d, and the arm body 6 may be mounted on the inclined surface.

When the charging cable 2 is pulled from the outside, the charging cable 2 may be pulled out of the arm space S1 at a pulling out angel (eg, 60° to 80°).

When the charging cable 2 is restored by its own weight, it may be lead into the arm space S1 at an lead-in angle at which the charging cable 2 is drawn.

The pulling out angle of the charging cable 2 may be, for example, 60° to 80°, and the lead-in angle of the charge cable 2 may be flexible.

The pulling out angle and the lead-in angle of the charging cable 2 may be different, and the mounter 6d may be an auxiliary or compensator capable of correcting the pulling out angle and the lead-in angle of the charging cable 2 by the arm guide 60.

When the upper end of the arm bracket 61 is mounted on the upper plate 6a of the arm body 6, the lower end of the arm bracket 61 may be spaced apart from the lower plate 6b of the arm body 6 in the vertical direction (Z).

A pair of arm pulleys 62 may be provided to the arm bracket 61, and the pair of arm pulleys 62 may comprise an upper arm pulley 62a and a lower arm pulley 62b. The charging cable 2, in particular, the upper cable 2d may pass between the upper arm pulley 62a and the lower arm pulley 62b.

The upper arm pulley 62a may guide the upper cable 2d from the upper side of the upper cable 2d.

The lower arm pulley 62b may guide the upper cable 2d from the lower side of the upper cable 2d.

The shape and curvature of the upper cable 2d may be different according to the position of the arm guide 60, and the shape and curvature of the upper cable 2d may be different according to the number of arm guides 60.

When a plurality of arm guides 60 are disposed, the upper cable 2d may not be sharply bent and may extend with a curvature.

A pair of arm guides 60 may be provided to the arm body 6.

The pair of arm guides 60A and 60B allow the inner cable 2c to have one curvature based on the point(the first point or the upper cable start point) where the upper cable 2d are bent or curved from the inner cable 2c.

The pair of arm guides 60A and 60B may be approximately spaced apart in the front-rear direction (X).

The pair of arm guides 60A and 60B may be disposed so that the upper cables 2d may have two or more curvatures based on the first point.

Hereinafter, for convenience of description, the point located at the outlet 8 of the charging cable 2 may be referred to as a second point, and the point located between the pair of arm guides 60A and 60B of the charging cable 2 may be referred to as a third point.

The pair of arm guides 60A and 60B may be disposed so that the upper cable 2d has one curvature between the first point and the second point.

The pair of arm guides 60A and 60B may be disposed so that the upper cable 2d has a first curvature between a first point and a third point, a second curvature between the third point and the first point, and a first curvature and a second curvature are different.

At least one of the pair of arm guides 60A and 60B may be inclined in the arm space S 1.

The pair of arm guides 60A and 60B may be disposed gradually closer toward the lower side.

The distance L3 between the lower ends of the pair of arm guides 60A and 60B may be shorter than the distance L4 between the upper ends of the pair of arm guides 60 and 62.

In an example of the pair of arm guides 60A and 60B, only one of the pair of arm guides 60A and 60B may be inclined and the other may be vertically disposed.

In another example of the pair of arm guides 60A and 60B, each of the pair of arm guides 60A and 60B may be inclined.

The inclined arm guides 60A (60B) may be disposed inclined forward or backward at an angle of approximately 15° to 38° with respect to the vertical line.

The pair of arm guides 60A and 60B may comprise a rear guide 60A and a front guide 60B.

The rear guide 60A may be closer to the rear plate 1a of the main body 1 of the rear plate 1a of the main body 1 and the outlet 8 of the arm body 6.

The rear guide 60A may be disposed inclined forward with respect to a vertical line. The lower end of the rear guide 60A may be inclined forward and downward.

The rear guide 60A may be disposed at an angle Θ2 of approximately 15° to 38° with respect to the vertical line, corresponding to the inclined angel of the front guide 60B. The rear guide 60A may be disposed inclined at an angle of approximately 25° to the vertical line.

The front guide 60B may be closer to the outlet 8 of the arm beady 6 of the rear plate 1a of the main body 1 and the outlet 8 of the arm beady 6.

The front guide 60B may be located in front of the rear guide 60B.

The front guide 60B may be disposed inclined backward with respect to the vertical line. The lower end of the front guide 60B may be inclined rearward and downward.

The front guide 60B may be disposed at an angle Θ3 of approximately 15° to 38° with respect to the vertical line, based on the pulling out angle at which the charging cable 2 is pulled out. The front guide 60B may be disposed at an angle of approximately 25° to the vertical line.

The rear guide 60A and the front guide 60B may be disposed inclined at the same angle or inclined at different angles.

The rear guide 60A and the front guide 60B may be inclined at different angles Θ2 and Θ3 with respect to the vertical line.

The angle Θ2 at which the rear guide 60A is disposed may not be the same as the angle Θ3 at which the front guide 60B is disposed. An angle Θ2 at which the rear guide 60A may be greater or smaller than an angle Θ3 of the front guide 60B.

The charging cable 2 extending upward in the inner space S2 of the cable cover 10 is guided by the rear guide 60A, since the rear guide 60A is inclined in the forward direction, the charging cable 2 is not bent or curved abruptly, and the upper cable 2d can be pulled in the rear guide 60A.

The upper cable 2d may extend substantially in the front-back direction X in the arm space S1. The upper cable 2d extending in the front-back direction (X) enters the front guide 60B, can be guided by the front guide 60B, and then can be taken out through the outlet 8 of the arm rail 7.

Since the front guide 60B is inclined rearward, the upper cable 2d is not bent or curved abruptly and can be pulled out through the outlet 8 while maintaining a straight shape as much as possible.

When the charging cable 2 is pulled out or lead in, the operating force is increased, and it is preferable that the friction area between the charging cable 2 and the arm pulley 62 be minimized.

In addition, the difference between the pulling out angle and the lead-in angle may be corrected by the mounter 6d, and the charging cable 2 may be bent or curved while maintaining a curvature within a set range.

The rear guide 60A close to the rear plate 1a of the body 1 and the front guide 60B close to the outlet 8 of the arm body 6 can maintain the curvature of the charging cable 2, and when the difference between the pulling out angle and the lead in angle is corrected by the mounter 6d, the operating force can be minimized, and even the mobility handicapped can easily use the charging cable 2.

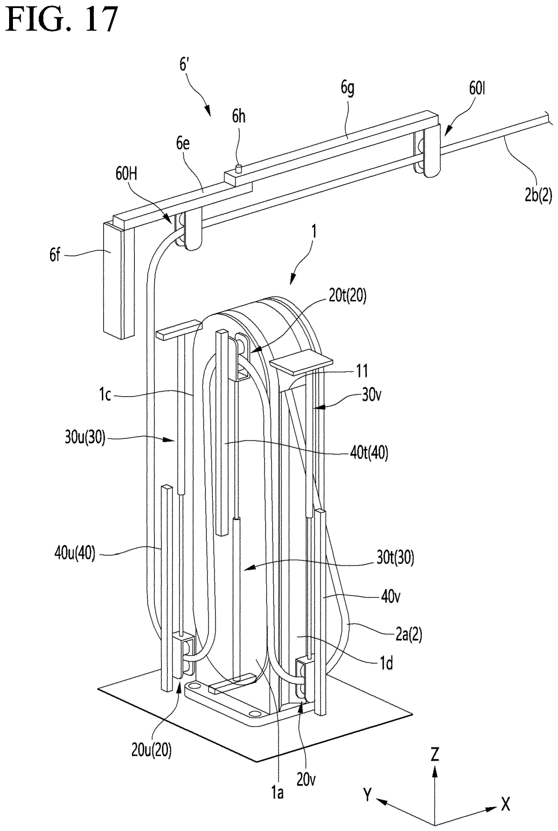

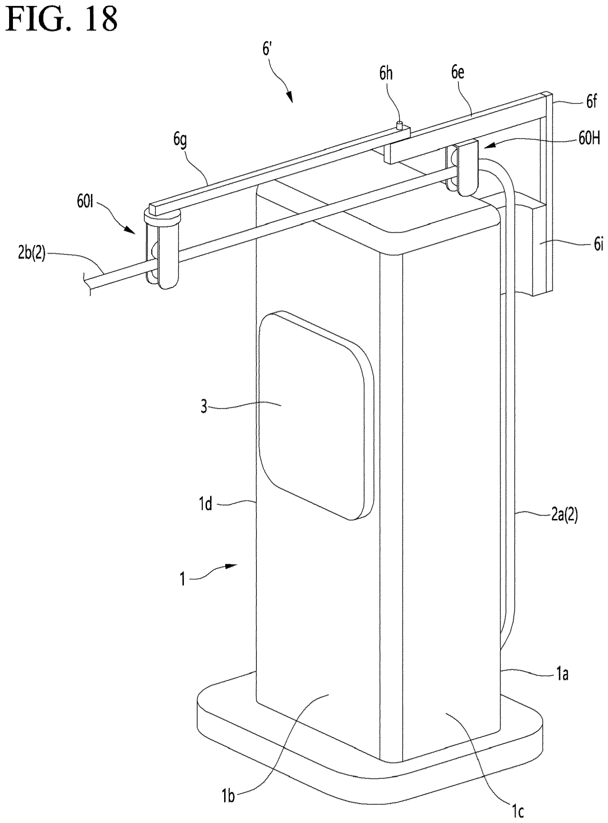

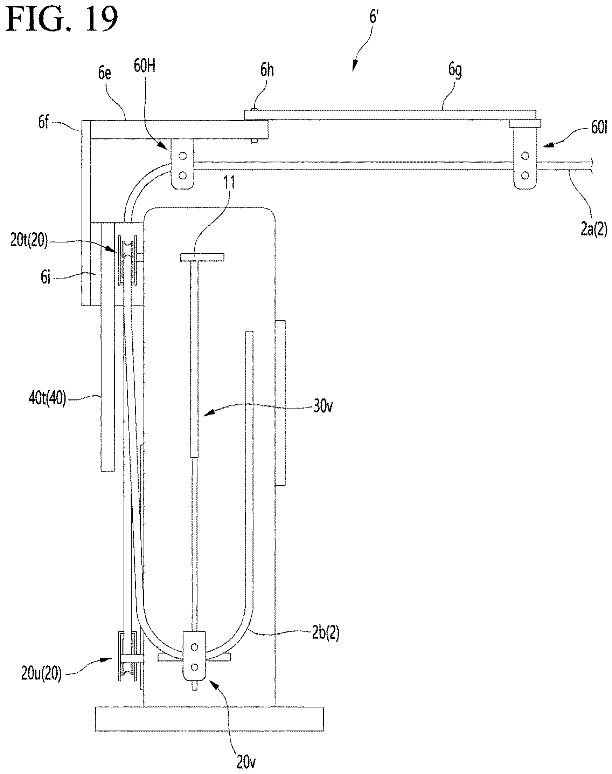

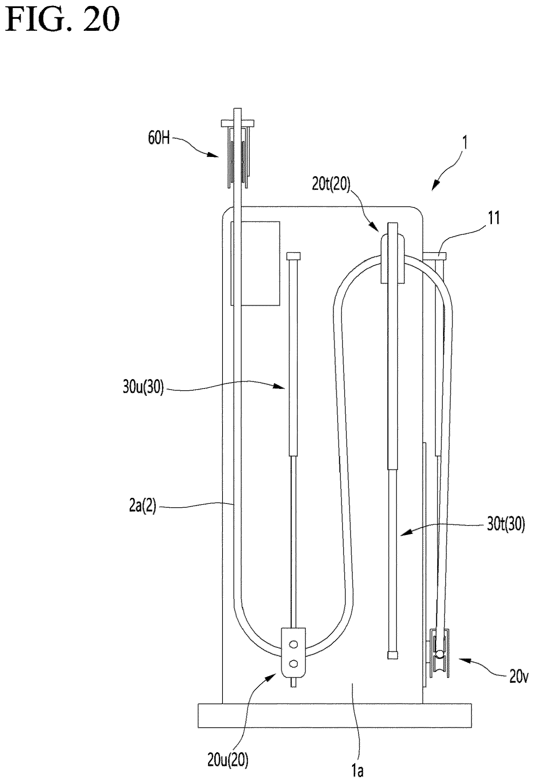

FIG. 17 is a diagram showing another example of a charger according to this embodiment; FIG. 18 is a perspective view showing another example of a charger according to this embodiment; FIG. 19 is a side view showing the side of another example of the charger according to the present embodiment; and FIG. 20 is a rear view showing the rear of another example of a charger according to this embodiment.

As shown in FIGS. 17 to 20, another example of the charger according to the present embodiment comprises a main body 1, a charging cable 2, a screen 3, a plurality of cable guides 20, and a plurality of dampers 30.

The main body 1 may be the same as or similar to the main body 1 shown in FIG. 1, and the same reference numerals are used to avoid redundant description, and detailed descriptions thereof are omitted. An outlet 11 through which the charging cable 2 passes may be formed in the main body 1 or a cable connector to which the charging cable 2 is connected may be provided. The outlet 11 or the cable connector may be provided on a side surface of the main body 1 as it may be provided on a surface other than the front surface of the main body 1. The outlet 11 or the cable connector may be provided on one of the left and right sides of the main body 1.

The charging cable 2 may be connected to the main body 1. The charging cable 2 may be the same as or similar to the charging cable 2 shown in FIG. 1, and the same reference numerals are used to avoid redundant description, and detailed descriptions thereof are omitted. The charging cable 2 may comprise a concealed portion 2a accommodated inside the charger and an exposed portion 2b drawn out of the charger.

The charging cable 2 may be disposed on at least two sides of the main body 1. The charger cable 2 may extend to the side of the main body 1 and may extend to the rear of the main body 1. The charging cable 2 may extend upward of the main body 1.

The charger may further comprise a cable cover (not shown). The cable cover may be disposed on the main body 1, and an inner space in which the charging cable 1 is accommodated may be formed inside the cable cover. The cable cover may be disposed on one surface of the main body 1 or disposed on multiple surfaces. The cable cover may comprise a side cover disposed on the side of the main body 1. The side cover can hide and protect the charging cable disposed between the side of the main body 1 and the side cover. The cable cover may comprise a rear cover disposed on the rear surface of the main body 1. The rear cover can hide and protect the charging cable disposed between the rear of the main body 1 and the rear cover.

The screen 3 may be provided on the front of the main body 1. The screen 3 is manipulated by a user and may be disposed on the front of the main body 1.

A plurality of cable guides 20 may be disposed on the first surface of the main body 1.

Here, the first surface of the main body 1 may be a surface other than the front surface of the main body 1, and may be one of the side surfaces and the rear surface of the main body 1. In this embodiment, the first surface of the main body 1 is described as the rear surface of the main body 1, but the first surface of the main body 1 is not limited to the rear surface of the main body 1, and it is possible to be either the left surface or the right surface.

In addition, the arrangement of the plurality of cable guides 20 on the first surface of the main body 1 may mean that the plurality of cable guides 20 are disposed between the first surface of the main body 1 and the cable cover.

A plurality of cable guides 20 may be disposed on the first surface so as to be able to move up and down. A plurality of cable guides 20 may be movably disposed between the first surface of the main body 1 and the cable cover.

The plurality of cable guides 20 may sequentially guide the charging cable 2.

Each of the plurality of cable guides 20 may be the same as or similar to the cable guide 20 shown in FIGS. 5 to 7 or the cable guide 20 shown in FIG. 8, and the same reference numerals are used to avoid redundant description, and a detailed description thereof is omitted.

A plurality of cable guides 20 may be disposed spaced apart from each other. The plurality of cable guides 20 may be moved up and down in opposite directions. When one of the plurality of cable guides 20 is lowered, the other of the plurality of cable guides 20 may be raised, and conversely, when one is raised, the other may be lowered.

An example of the plurality of cable guides 20 may comprise a first cable guide 20t and a second cable guide 20u.

The first cable guide 20t may be moved up and down between the rear upper surface of the main body 1 and the rear central surface of the main body 1.

The first cable guide 20t may descend from the rear surface of the upper portion of the rear plate 1a to rear surface of the central portion of the rear plate 1a, and conversely, may again rise from rear surface of the central portion of the rear plate 1a to the rear surface of the upper portion of the rear plate 1a.

The second cable guide 20u may be moved up and down between the rear lower surface of the main body 1 and the rear central surface of the main body 1. The second cable guide 20u may rise from the rear surface of the lower portion of the rear plate 1a to rear surface of the central portion of the rear plate 1a, and conversely, may again rise from rear surface of the central portion of the rear plate 1a to the rear surface of the lower portion of the rear plate 1a.

The plurality of cable guides 20 are not limited to two, and may be provided with three or four.

A plurality of dampers 30 may be connected to a plurality of cable guides 20. The damper 30 may correspond 1:1 to the cable guide 20.

Each of the plurality of dampers 30 may be the same as or similar to the dampers 30 shown in FIGS. 5, 10 and 11, and the same reference numeral is used to avoid redundant description, and detailed description thereof will be omitted.

The plurality of dampers 30 may comprise a lower damper 30t and an upper damper 30u.

The lower damper 30t may be connected to a first cable guide 20t of the plurality of cable guides 30.

The lower damper 30t may be located below the first cable guide 20t, and may limit the rapid elevation of the first cable guide 20t.

A rod mount 34 mounted on the bracket 21 of the first cable guide 20t may be disposed at an upper end of the piston rod 32 of the lower damper 30t.

The lower damper 30t may be disposed on the lower portion of the rear surface of the main body 1. Here, the arrangement of the lower damper 30t on the lower portion of the rear surface of the main body 1is not limited to that the lower damper 30t is mounted on the main body 1, and mean that the lower damper 30t may be installed at least one of the main body 1 and the cable cover.

The upper damper 30u may be connected to the second cable guide 20u of the plurality of cable guides 30.

The upper damper 30u may be located above the second cable guide 20u, and may limit the rapid elevation of the second cable guide 20u.

A rod mount 34 mounted on the bracket 21 of the second cable guide 20u may be disposed at a lower end of the piston rod 32 of the upper damper 30u.

The upper damper 30u may be disposed on the upper portion of the rear surface of the main body 1. Here, the arrangement of the upper damper 30u on the upper portion of the rear surface of the main body 1 is not limited to that the upper damper 30u is mounted on the main body 1, and mean that the upper damper 30u may be installed at least one of the main body 1 and the cable cover.

The charger may comprise a plurality of guide rails 40 that guide the plurality of cable guides 20 to be raised or lowered. The guide rail 40 and the cable guide 20 may correspond 1:1.

The plurality of guide rails 40 may comprise a first guide rail 40t and a second guide rail 40u.

The first guide rail 40t may guide the first cable guide 20t up and down. The first guide rail 40t may be disposed on the upper portion of the rear surface of the main body 1. Here, the arrangement of the first guide rail 40t on the upper portion of the rear surface of the main body 1 is not limited to mounting the first guide rail 40t on the rear upper surface of the main body 1, and mean that the first guide rail 40t may be installed at least one of the main body 1 and the cable cover. When the first guide rail 40t is mounted on the cable cover, the first guide rail 40t may be spaced apart from the body 1. The first cable guide 20t may be elevated between the main body 1 and the first guide rail 40t.

The second guide rail 40u may guide the second cable guide 20u up and down. The second guide rail 40u may be disposed on the lower portion of the rear surface of the main body 1. Here, the arrangement of the second guide rail 40u on the lower portion of the rear surface of the main body 1 is not limited to mounting the second guide rail 40u on the lower rear surface of the main body 1, and mean that the second guide rail 40u may be installed at least one of the main body 1 and the cable cover. When the second guide rail 40u is mounted on the cable cover, the second guide rail 40u may be spaced apart from the body 1. The second cable guide 20u may be elevated between the main body 1 and the second guide rail 40u.

The charger may further comprise a side cable guide 20v, a side damper 30v and a side guide rail 40v.

The side cable guide 20v is disposed on the side of the main body 1 so as to be able to move up and down and guides the charging cable 2. The side cable guide 20v may be lifted from one of the left and right sides of the body 1.

The side cable guide 20v may be the same as or similar to the cable guide 20 shown in FIGS. 5 to 7 or the cable guide 20 shown in FIG 8. A detailed description thereof is omitted.

The side damper 30v may be connected to the side cable guide 20v. The side damper 30v may be the same as or similar to the damper 30 shown in FIGS. 5, 10 and 11, and the same reference numeral is used to avoid redundant description, and detailed description thereof will be omitted.

The side damper 30v may be positioned above the side cable guide 20v and may limit the rapid elevation of the side cable guide 20v.

A rod mount 34 mounted on the bracket 21 of the side cable guide 20v may be disposed at a lower end of the piston rod 32 of the side damper 30v.

The side damper 30v may be disposed on the upper portion of one side surface of the main body 1. Here, the arrangement that the side damper 30v is disposed on the upper portion of one side surface of the main body 1 is not limited to that the side damper 30v is installed on the main body 1, and mean that the side damper 30v may be installed at least one of the main body 1 and the cable cover.

The side guide rails 40v may guide the side cable guides 20v up and down.

The side guide rail 40v may be disposed on lower portion of the side surface of the main body 1. Here, the arrangement that the side guide rail 40v is not limited to being mounted on lower portion of the side surface of the main body 1, mean that the side guide rail 40v may be at least one of the main body 1, and the cable cover,

When the side guide rails 40v is mounted on the cable cover, the side guide rails 40v may be spaced apart from the main body 1. The side cable guide 20v may be elevated between the main body 1 and the side guide rail 40v.

The charger further comprises an upper cable guide 6' disposed above the main body 1.

An example of the upper cable guide 6' may comprises a fixed bracket 6f having a long extension 6e in the front-rear direction X, and a movable bracket 6g arranged to rotate or slide on the extension 6e.

The movable bracket 6g may be disposed elongately in the extension direction X of the extension 6e, and may be rotated left and right direction to have an acute or obtuse inclination angle with the extension 6e.

A connecting portion 6h rotatably connecting the movable bracket 6g to the extension 6e may be formed at a front portion of the extension portion 6e or a rear portion of the movable bracket 6g.

A mounter 6i to which the upper cable guide 6' is mounted may be disposed on the main body 1. The mounter 6i may be disposed above the upper portion of rear surface of the main body 1. The fixing bracket 6f may be mounted on the mounter 6i.

An example of the upper cable guide 6' may further comprise a fixed cable guide 60H installed on the fixed bracket 6f and a movable cable guide 60I installed on the movable bracket 6g.

Each of the fixed cable guide 60H and the movable cable guide 60I may be the same as or similar to a pair of arm guides 60A and 60B shown in FIG. 16. Each of the fixed cable guide 60H and the movable cable guide 60I may comprise an arm bracket 61 and an arm pulley 62, like the arm guides 60A and 60B shown in FIG. 16.

Another example of the upper cable guide 6' may comprise the arm body 6 and a plurality of arm guides 60A and 60B.

An arm space S1 may be formed in the arm body 6. An arm rail 7 guiding the charging cable 2 may be formed on the arm body 6. The arm body 6 may be the same as or similar to the arm body 6 shown in FIGS. 1 to 6 and 16, and hereinafter, the same reference numeral is used to avoid redundant description, and a detailed description thereof will be omitted.

A plurality of arm guides 60A and 60B may be accommodated in the arm space S1. At least one of the plurality of arm guides 60A and 60B may be inclined forward or backward. The plurality of arm guides 60A (60B) may be the same as or similar to the pair of arm guides 60A (60B) shown in FIG. omit explanation.

The charging cable 2 may comprise a first charging cable portion located next to the main body 1, and the first charging cable portion may be curved in a "U" shape by the side cable guide 20v.

The first charging cable part may extend to the rear of the main body 1, and the charging cable 2 may comprise a second charging cable portion extending from the first charging cable portion. The second charging cable part may be curved in a "∩" shape by the first cable guide 20t.

The charging cable 2 may comprise a third charging cable portion extending from the second charging cable portion. The third charging cable portion may be curved in a "U" shape by the second cable guide 20u.

Another example of the charger as described above is when the charging cable 2 is pulled in the pull-out direction, the second cable guide 20u may be raised, the first cable guide 20t may be lowered, and the side cable guide 20v may be raised.

In another example of the charger, when the pulling force applied to the charging cable 2 is removed, the second cable guide 20u, the first cable guide 20t, and the side cable guide 20v can be restored, and charging cable 2 can be retracted. When the charging cable 2 is lead in, the second cable guide 20u may be lowered, the first cable guide 20t may be raised, and the side cable guide 20v may be lowered.

According to this embodiment, the length of the charging cable can be extended to the maximum, making it easy to use the charging environment for specific environments and special vehicles.

In addition, the charging cable can be concisely organized by concealing the charging cable as much as possible, and the environment in which the charging cable touches the floor can be minimized.

The above description is merely an example of the technical idea of the present invention, and various modifications and variations can be made to those skilled in the art without departing from the essential characteristics of the present invention.

Therefore, the embodiments disclosed in the present invention are not intended to limit the technical idea of the present invention, but to explain, and the scope of the technical idea of the present invention is not limited by these embodiments.

The protection scope of the present invention should be construed according to the claims below, and all technical ideas within the equivalent range should be construed as being comprised in the scope of the present invention.

## Claims

1. A charger comprising:
a main body (1);
a screen (3) provided on the front of the main body (1);
a charging cable (2) connected to the main body (1);
a plurality of cable guides (20) disposed on a first surface other than the front surface of the main body (1) to be raised or lowered and sequentially guiding the charging cable (2);
a lower damper (30t) connected to a first cable guide (20t) of the plurality of cable guides (20); and
an upper damper (30u) connected to a second cable guide (20u) of the plurality of cable guides (20).

2. The charger according to claim 1,
wherein the plurality of cable guides (20) is elevated in opposite directions.

3. The charger according to claim 1 or 2, further comprising;
a first guide rail (40t) for guiding the first cable guide (20t) to be raised and lowered; and
a second guide rail (40u) for guiding the second cable guide (20u) to be lowered and raised.

4. The charger according to any one of claims 1 to 3,
wherein the first surface is a rear surface of the main body (1).

5. The charger according to any one of claims 1 to 4, further comprising;
a side cable guide (20v) disposed on a side surface of the main body (1) to be raised and lowered and guiding the charging cable (2);
a side damper (30v) connected to the side cable guide (20v); and
a side guide rail (40v) for guiding the elevation of the side cable guide (20v).

6. The charger according to any one of claims 1 to 5, further comprising
a cable cover covering the charging cable,
wherein the cable cover comprises;
a side cover disposed on the side of the main body (1); and
a rear cover disposed on the rear surface of the main body (1).

7. The charger according to claim 6,
wherein an outlet (11) through which the charging cable (2) passes is formed on the side surface of the main body(1).

8. The charger according to claim 6,
wherein a cable connector to which the charging cable (2) is connected is provided on the side surface of the main body.

9. The charger according to any one of claim 1 to 8,
wherein each of the plurality of cable guides (20) comprises a bracket and at least one pulley rotatably installed on the bracket,

10. The charger according to any one of claims 1 to 9,
wherein the lower damper (30t) is located below the first cable guide (20t),
wherein the lower damper (30t) comprises;
a piston rod; and
a rod mount disposed at an upper end of the piston rod and mounted on the first cable guide (20t).

11. The charger according to any one of claims 1 to 10,
wherein the upper damper (30u) is located above the second cable guide (20u),
wherein the upper damper (30u) comprises;
a piston rod; and
a rod mount disposed at a lower end of the piston rod and mounted on the second cable guide (20u).

12. The charger according to any one of claims 1 to 11, further comprising;
an upper cable guide (6') disposed above the main body (1).

13. The charger according to claim 12,
wherein the upper cable guide (6') comprises
a fixed bracket (6f) having a long extension in the front-rear direction;
a fixed cable guide (60H) installed on the fixed bracket;
a movable bracket (6g) arranged to rotate or slide on the extension; and
a movable cable guide (60I) installed on the movable bracket.

14. The charger according to claim 12,
wherein the upper cable guide (6') comprises;
an arm body (6) in which an arm space (S1) is formed; and
a plurality of arm guides (60A and 6OB) accommodated in the arm space (S1).

15. The charger according to claim 14, further comprising;
an arm rail (7) for guiding the charging cable (2) is formed on the arm body (6),
wherein at least one of the plurality of arm guides (60A and 6OB) is disposed inclined forward or backward.

## Amended claims

### Amended claims in accordance with Rule 137(2) EPC.

1. A charger comprising:
a main body (1);
a screen (3) provided on the front of the main body (1);
a charging cable (2) connected to the main body (1);
a plurality of cable guides (20) disposed on a first surface other than the front surface of the main body (1) to be raised or lowered and sequentially guiding the charging cable (2);
a lower damper (30t) connected to a first cable guide (20t) of the plurality of cable guides (20); and
an upper damper (30u) connected to a second cable guide (20u) of the plurality of cable guides (20),
wherein the lower damper (30t) is located below the first cable guide (20t),
wherein the upper damper (30u) is located above the second cable guide (20u),
wherein when the charging cable (2) is pulled in the pull-out direction, the second cable guide (20u) is raised and the first cable guide (20t) is lowered, and
wherein when the charging cable (2) is lead in, the second cable guide (20u) is lowered and the first cable guide (20t) is raised.

2. The charger according to claim 1,
wherein the plurality of cable guides (20) is elevated in opposite directions.

3. The charger according to claim 1 or 2, further comprising;
a first guide rail (40t) for guiding the first cable guide (20t) to be raised and lowered; and
a second guide rail (40u) for guiding the second cable guide (20u) to be lowered and raised.

4. The charger according to any one of claims 1 to 3,
wherein the first surface is a rear surface of the main body (1).

5. The charger according to any one of claims 1 to 4, further comprising;
a side cable guide (20v) disposed on a side surface of the main body (1) to be raised and lowered and guiding the charging cable (2);
a side damper (30v) connected to the side cable guide (20v); and
a side guide rail (40v) for guiding the elevation of the side cable guide (20v).

6. The charger according to any one of claims 1 to 5, further comprising
a cable cover covering the charging cable,
wherein the cable cover comprises;
a side cover disposed on the side of the main body (1); and
a rear cover disposed on the rear surface of the main body (1).

7. The charger according to claim 6,
wherein an outlet (11) through which the charging cable (2) passes is formed on the side surface of the main body (1).

8. The charger according to claim 6,
wherein a cable connector to which the charging cable (2) is connected is provided on the side surface of the main body.

9. The charger according to any one of claim 1 to 8,
wherein each of the plurality of cable guides (20) comprises a bracket and at least one pulley rotatably installed on the bracket,

10. The charger according to any one of claims 1 to 9,
wherein the lower damper (30t) is located below the first cable guide (20t),
wherein the lower damper (30t) comprises;
a piston rod; and
a rod mount disposed at an upper end of the piston rod and mounted on the first cable guide (20t).

11. The charger according to any one of claims 1 to 10,
wherein the upper damper (30u) is located above the second cable guide (20u),
wherein the upper damper (30u) comprises;
a piston rod; and
a rod mount disposed at a lower end of the piston rod and mounted on the second cable guide (20u).

12. The charger according to any one of claims 1 to 11, further comprising;
an upper cable guide (6') disposed above the main body (1).

13. The charger according to claim 12,
wherein the upper cable guide (6') comprises
a fixed bracket (6f) having a long extension in the front-rear direction;
a fixed cable guide (60H) installed on the fixed bracket;
a movable bracket (6g) arranged to rotate or slide on the extension; and
a movable cable guide (601) installed on the movable bracket.

14. The charger according to claim 12,
wherein the upper cable guide (6') comprises;
an arm body (6) in which an arm space (S1) is formed; and
a plurality of arm guides (60A and 6OB) accommodated in the arm space (S 1).

15. The charger according to claim 14, further comprising;
an arm rail (7) for guiding the charging cable (2) is formed on the arm body (6),
wherein at least one of the plurality of arm guides (60A and 6OB) is disposed inclined forward or backward.
